**Europäisches Patentamt**

**European Patent Office**

**Office européen des brevets**

(19)

(11) Veröffentlichungsnummer: **0 123 893**
**B1**

(12) # EUROPÄISCHE PATENTSCHRIFT

(45) Veröffentlichungstag der Patentschrift:
**06.08.86**

(21) Anmeldenummer: **84103318.6**

(22) Anmeldetag: **26.03.84**

(51) Int. Cl.⁴: **H 04 N 7/13**

(54) **Verfahren und Schaltungsanordnung zur Bildfehlerkorrektur.**

(30) Priorität: **31.03.83 DE 3311911**

(43) Veröffentlichungstag der Anmeldung:
**07.11.84 Patentblatt 84/45**

(45) Bekanntmachung des Hinweises auf die Patenterteilung:
**06.08.86 Patentblatt 86/32**

(84) Benannte Vertragsstaaten:
**AT BE CH DE FR GB IT LI NL SE**

(56) Entgegenhaltungen:
**DE - A - 2 553 269**

(73) Patentinhaber: **Siemens Aktiengesellschaft Berlin und München, Wittelsbacherplatz 2, D-8000 München 2 (DE)**

(72) Erfinder: **Strehl, Herbert, Dipl.-Ing., Drozzaweg 15, D-8000 München 70 (DE)**

## Beschreibung

Bei der digitalen Übertragung von Bildsignalen im zukünftigen digitalen Fernmeldenetz wird mit einer Bitfehlerrate von ca. $1 \cdot 10^{-6}$ gerechnet. Bereits bei dieser geringen Bitfehlerrate wird die Helligkeit oder die Farbe einzelner Bildpunkte so stark verfälscht, dass die Bildqualität erkennbar beeinträchtigt wird. Auf einigen Übertragungsstrecken kann die Bitfehlerrate noch wesentlich höher liegen, so beispielsweise $1 \cdot 10^{-2}$. Zur Korrektur der Bitfehler selbst können die aus der Datenübertragung bekannten fehlerkorrigierenden Verfahren verwendet werden. Es ist hierbei ausreichend, dass die höchstwertigsten Bits der zu übertragenden Bildsignalwerte geschützt werden. Eine Störung der niederwertigen Bits bewirkt nur eine geringe Verfälschung der Farbe oder Helligkeit und erscheint deshalb weniger störend. Nachteilig bei der Anwendung eines üblichen Fehlerkorrekturverfahrens ist die relativ hohe Redundanz, die zu einer Erhöhung der Übertragungsrate führt. Ausserdem wird die Korrekturfähigkeit bereits bei relativ geringen Bitraten überschritten, was sogar zu einer Verschlechterung der Bildqualität gegenüber einer Anordnung ohne Fehlerkorrektur führen kann.

Abhängig von der gewählten Codierung ist oftmals ein beträchtlicher Schaltungsaufwand erforderlich. Aufgabe der Erfindung ist es, ein einfaches und wirksames Verfahren zur Bildfehlerkorrektur bei der digitalen Übertragung von Bildsignalen anzugeben, welches nur geringe zusätzliche Übertragungskapazität erfordert und welches auch bei sehr schlechten Bitfehlerraten noch zufriedenstellend arbeitet.

Ausgehend vom einleitend beschriebenen Stand der Technik, wird diese Aufgabe dadurch gelöst, dass empfangsseitig ein Vergleich der empfangenen Bildsignalwerte mit aus benachbarten Bildsignalwerten errechneten Bildsignalschätzwerten erfolgt und dass bei einer Überschreitung eines vorgegebenen Schwellwertes durch den Betrag der Differenz zwischen dem Bildsignalwert und dem zugehörigen Bildsignalschätzwert statt des empfangenen Bildsignalwertes der entsprechende Bildsignalschätzwert weiterverwendet wird.

Bei dem erfindungsgemässen Verfahren werden nicht die Bitfehler selbst, sondern die dadurch verursachten Bildfehler korrigiert. Eine Korrektur erfolgt nur dann, wenn der Bildfehler störend in Erscheinung tritt, also eine bestimmte Grösse, den Schwellwert, überschreitet. Bei diesem Verfahren wird vorausgesetzt, dass benachbarte Bildsignalwerte miteinander korreliert sind. Schaltungsmässig lässt sich das Verfahren am einfachsten realisieren, wenn jeweils zwei oder mehr zeitlich aufeinanderfolgende Bildsignalwerte betrachtet werden. Dies entspricht den Bildpunkten einer Zeile. Ebenso ist jedoch eine senkrechte Korrelation von Bildsignalwerten oder auch die Betrachtung weiterer Bildsignalwerte in der Umgebung des zu beurteilenden Bildsignalwertes möglich. Weicht dieser Bildsignalwert von den benachbarten Bildsignalwerten erheblich ab, so wird anstelle des wahrscheinlich gestörten Bildsignalwertes der Bildsignalschätzwert verwendet, der aus den benachbarten Bildsignalwerten errechnet wurde.

Es ist vorteilhaft, dass eine zusätzliche Kennzeichnung übertragen wird, wenn die Differenz zwischen dem Bildsignalwert und einem benachbarten Bildsignalwert oder dem errechneten Bildsignalschätzwert den vorgegebenen Schwellwert überschreitet.

Es ist im Prinzip gleich, ob die Differenz zwischen zwei aufeinanderfolgenden Bildsignalwerten oder zwischen dem letzten Bildsignalwert und einem aus den früheren Bildsignalwerten errechnetem Schätzwert ermittelt wird. Wenn der Schätzwert nicht nur durch lineare Extrapolation aus zwei früheren Bildsignalwerten ermittelt wird, so ergibt eine nichtlineare Extrapolation oftmals dem Signalverlauf besser angepasste Bildsignalschätzwerte.

Um bei der Übertragung grosser Änderungen der Bildsignalwerte, wie sie beispielsweise bei Kanten von Gegenständen auftreten, keine Verfälschung des Bildinhalts zu bekommen, muss die Bildfehlerkorrektur unterbleiben. Die Kennzeichnung dieser Bildsignalwerte erfolgt zum Beispiel durch ein spezielles Bit, das bei jedem Bildsignalwert mitübertragen wird, oder zum Beispiel durch numerische Angabe des kritischen Bildsignalwertes durch numerische Kennzeichnung in der Zeilenaustastlücke. Dieses Problem kann auch dadurch reduziert werden, dass die zeitliche Korrelation der entsprechenden Bildsignalwerte in aufeinanderfolgenden Bildern ausgenutzt wird.

Es ist vorteilhaft, dass die höchstwertigsten Bits der Bildsignalwerte durch eine fehlererkennende Codierung gesichert werden.

· Die fehlererkennende Codierung übernimmt hier die Aufgabe der Kennzeichnung.

Es ist vorteilhaft, dass empfangsseitig bei der Überschreitung des Schwellwertes durch die Differenz zwischen dem Bildsignalwert und einem benachbarten Bildsignalwert oder dem Bildsignalschätzwert (die empfangenen Bildsignalwerte) weiterverwendet werden, wenn diese Überschreitung durch die Kennzeichnung bestätigt oder aufgrund der fehlererkennenden Codierung als korrekt angenommen wird.

Um empfangsseitig bei grösseren Unterschieden benachbarter Bildsignalwerte keine Verfälschung des Bildinhaltes zu bekommen, wird die Bildfehlerkorrektur bei Empfang einer entsprechenden Kennzeichnung oder einer durch die Codierung erfolgten Bestätigung eines ungefälschten Signalwertes abgeschaltet.

Es ist zweckmässig, dass bei den Schwellwert überschreitenden Differenzen zweier benachbarter Bildsignalwerte dann der empfangene Bildsignalwert weiterverwendet wird, wenn dieser zu mindestens einem weiteren angrenzenden Bildsignalwert eine Differenz kleiner als der vorgegebene Schwellwert aufweist.

Hierbei ist keine zusätzliche Kennzeichnung oder eine fehlererkennende Codierung notwendig, um die Übertragung von aufeinanderfolgenden, stark unterschiedlichen Bildsignalwerten zu gewährleisten, sobald nur zwei benachbarte Bildsignalwerte ungefähr denselben Wert aufweisen. Als benachbarte Bildsignalwerte können wieder waagerecht, senkrecht, diagonal oder sogar, allerdings mit beträchtlichem Speicheraufwand, die entsprechenden Bildsignalwerte aufeinanderfolgender Bilder betrachtet werden. Sieht man von der Ausnutzung der zeitlichen Korrelation ab, so ergibt sich eine Unterdrückung eines einzelnen Signalwertes, der stark von den benachbarten Signalwerten abweicht; diese dürfte jedoch nur in extremen Ausnahmefällen störend wirken.

Bei einer Schaltungsanordnung zur Durchführung des Verfahrens ist es vorteilhaft, dass in einem Empfangsteil die Bildsignalwerte einem ersten Eingang eines Komparators und einem Eingang einer Rechenschaltung zugeführt werden, deren Ausgang mit einem zweiten Eingang des Komparators verbunden ist, dessen Ausgang einen elektronischen Umschalter steuert, dessen Eingängen die empfangenen Bildsignalwerte und die Bildsignalschätzwerte zugeführt sind.

Durch eine Rechenschaltung wird aus den bereits empfangenen Bildwertsignalen ein Bildsignalschätzwert errechnet, der mit dem entsprechenden empfangenen Bildsignalwert verglichen wird.

Ist die Differenz zwischen beiden Werten so gross, dass der vorgegebene Schwellwert überschritten wird, so wird von dem Komparator der elektronische Umschalter so gesteuert, dass der Bildsignalschätzwert an den Ausgang durchgeschaltet wird. Der elektronische Umschalter kann durch eine Zeitschaltung realisiert werden, durch die der Bildsignalwert oder der entsprechende Bildsignalschätzwert als Codewort von Verzögerungsgliedern oder Speichern auf dem Ausgang der Schaltungsanordnung gegeben werden.

Die Rechenschaltung besteht beispielsweise aus einem Prädiktor, der im einfachsten Fall eine lineare Extrapolation durchführt. Hierbei wird die Differenz zwischen zwei aufeinanderfolgenden Signalwerten ermittelt und diese Differenz zu dem letzten Signalwert hinzuaddiert. Hierdurch ergibt sich der neue Bildsignalschätzwert, der mit dem nächsten empfangenen Bildsignalwert verglichen wird. Für die Berechnung des Bildsignalschätzwertes können natürlich mehrere bereits empfangene Bildsignalwerte mitverwendet werden. Ebenso ist auch die Berechnung mehrerer aufeinanderfolgender Bildsignalschätzwerte beim Empfang gestörter Bildsignalwerte möglich. Der Aufbau von Pädiktoren ist aus der DPCM-Technik ausreichend bekannt. Anstelle eines Prädiktors kann natürlich auch ein Interpolator verwendet werden. Angefangen bei der linearen Interpolation sind auch komplizierte Ausführungsformen des Interpolators einsetzbar. Im allgemeinen wird man jedoch nur einen oder wenige Bildsignalwerte verwenden, die später als der zu beurteilende Bildsignalwert empfangen wurden. Der Interpolator bietet im allgemeinen eine etwas grössere Genauigkeit bei vergrössertem Schaltungsaufwand und einer zusätzlichen Laufzeit der Schaltungsanordnung, die jedoch in keinem Fall störend wirkt.

Weitere vorteilhafte Ausbildungen der Erfindung sind in den übrigen Unteransprüchen angegeben.

Das Verfahren wird anhand von Ausführungsbeispielen näher erläutert.

Es zeigen

Fig. 1 einen Ausschnitt eines Bildsignals,

Fig. 2 das Prinzipschaltbild eines Empfangsteils,

Fig. 3 das Prinzipschaltbild eines Sendeteils,

Fig. 4 das Prinzipschaltbild eines zugehörigen Empfangsteils mit einem Decodierer zur Auswahlsteuerung durch eine zusätzliche Kennzeichnung,

Fig. 5 eine Variante des Empfangsteils, die ebenfalls die korrekte Übertragung von aufeinanderfolgenden Bildsignalwerten mit grossen Unterschieden ermöglicht,

Fig. 6 einen Komparator und

Fig. 7 eine Rechenschaltung.

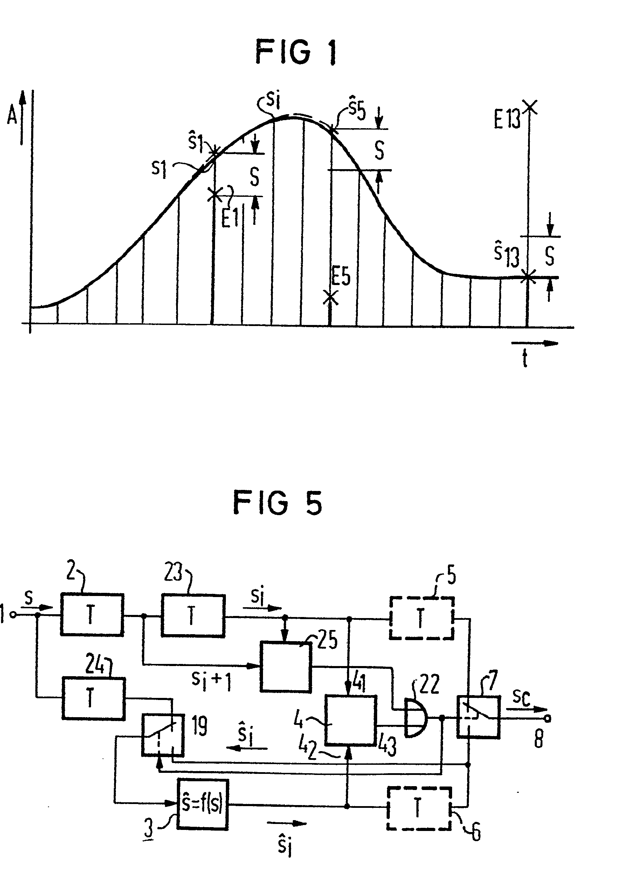

In Fig. 1 ist ein Ausschnitt des Bildsignals dargestellt. Die Amplituden A der einzelnen Bildsignalwerte s sind durch eine einhüllende Kurve verbunden. Statt des Signalwertes $s_1$ wird jedoch ein fehlerhafter Signalwert E1 empfangen. Der aus den vorangegangenen Signalwerten errechnete Bildsignalschätzwert $\hat{s}_1$ weicht nur minimal von dem tatsächlichen Bildsignalwert $s_1$ ab. Da der fehlerhafte Bildsignalwert E1 innerhalb des Schwellwertes S vom errechneten Bildsignalschätzwert $\hat{s}_1$ aus gesehen liegt, erfolgt keine Bildfehlerkorrektur. Nach einigen unverfälschten Signalwerten $s_1$ wird ein weiterer fehlerhafter Signalwert E5 statt des korrekten Bildsignalwertes $s_5$ empfangen. Von einem errechneten Bildsignalschätzwert $\hat{s}_5$ weicht der fehlerhafte Signalwert E5 um mehr als der Schwellwert S ab. Deshalb wird statt des fehlerhaften Signalwertes E5 der zugehörige Bildsignalschätzwert $\hat{s}_5$ weiterverwendet. Nach mehreren korrekt empfangenen Signalwerten wird ein fehlerhafter Signalwert E13 empfangen. Auch dieser fehlerhafte Signalwert weicht um mehr als der zulässige Schwellwert S vom errechneten Bildsignalschätzwert $\hat{s}_{13}$ ab. Es wird also wiederum der errechnete Bildsignalschätzwert $\hat{s}_{13}$ statt des fehlerhaften Signalwertes E13 weiterverwendet.

Aus Fig. 1 ist ersichtlich, dass bei einem korrelierten Signal die errechneten Signalschätzwerte sehr gut mit den Signalwerten s übereinstimmen. Im allgemeinen dürfte eine lineare Extrapolation ausreichend sein; die Verwendung mehrerer Signalwerte und eine verbesserte Extrapolation, beispielsweise unter Verwendung eines Polynoms, bringt noch bessere Ergebnisse. Ein Interpolationsverfahren zur Errechnung der Signalschätzwerte ist im allgemeinen nicht erforderlich.

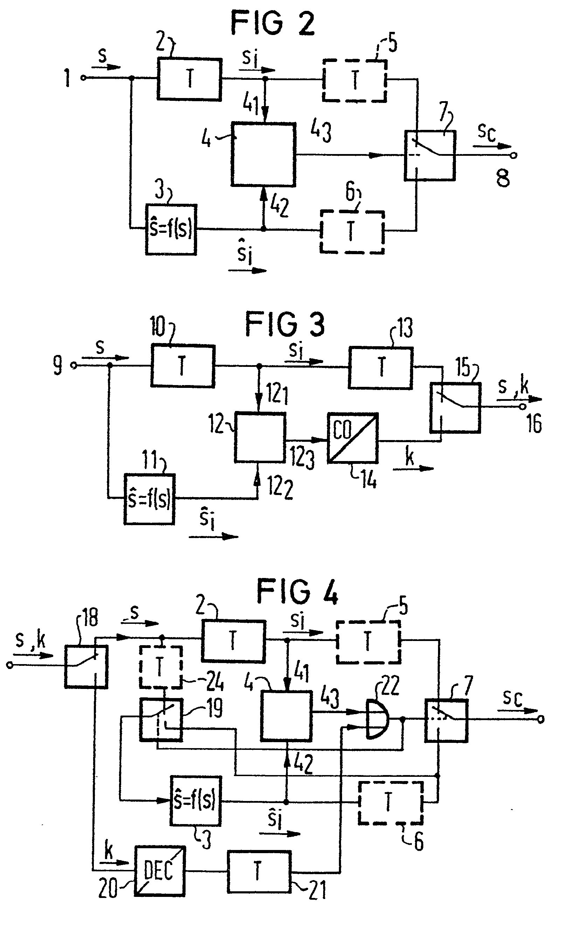

In Fig. 2 ist das Prinzipschaltbild eines Empfangsteils dargestellt. Dem Eingang 1 der Schaltungsanordnung werden die Bildsignalwerte s zugeführt. Ein erstes Verzögerungsglied 2 ist an den Eingang 1 angeschlossen. Der Ausgang des Verzögerungsgliedes ist mit einem ersten Eingang $4_1$ eines Komparators 4 und mit dem Eingang eines zweiten Verzögerungsgliedes 5 verbunden. Der Ausgang des zweiten Verzögerungsgliedes ist mit einem elektronischen Umschalter 7 verbunden, an dessen Ausgang 8 die korriegierten Bildsignalwerte $s_c$ ausgegeben werden. An dem Eingang 1 ist ebenfalls eine Rechenschaltung 3 angeschlossen, die die Bildsignalschätzwerte $\hat{s}_1$ ermittelt. Der Ausgang der Rechenschaltung 3 ist mit einem zweiten Eingang $4_2$ des Komparators 4 verbunden und über ein drittes Verzögerungsglied 6 mit dem elektronischen Umschalter 7. Der elektronische Umschalter wird von dem Ausgang $4_3$ des Komparators 4 gesteuert.

Aus den am Eingang 1 anliegenden Bildsignalwerten s werden in der Rechenschaltung 3 die Bildsignalschätzwerte $\hat{s}$, errechnet. Bei diesem Prinzipschaltbild wird angenommen, dass die Rechenschaltung 3 eine bestimmte Laufzeit aufweist, die durch das erste Verzögerungsglied 2 ausgeglichen wird.

Enthält die Rechenschaltung 3 eine Interpolationsschaltung, so ist dieses erste Verzögerungsglied 2 ebenfalls erforderlich. Der Komparator vergleicht jeweils einen errechneten Bildsignalschätzwert $\hat{s}$, mit dem zugehörigen Bildsignalwert $s$. Ist die betragsmässige Abweichung grösser als der vorgegebene Schwellwert, gelangen über den elektronischen Umschalter 7 die errechneten Bildsignalschätzwerte $\hat{s}$, an den Ausgang 8 der Schaltungsanordnung. Ist dagegen die Differenz zwischen dem errechneten Bildsignalschätzwert $\hat{s}_i$ und dem zugehörigen Bildsignalwert $s$, kleiner als der Schwellwert S, so werden die Bildsignalwerte $s$, am Ausgang 8 abgegeben. Die ausgegebenen korrigierten Signalwerte sind mit $s_c$ bezeichnet.

Das zweite und das dritte Verzögerungsglied 5, 6 sind bei einer seriellen Arbeitsweise der Schaltungsanordnung stets erforderlich. Erfolgt dagegen die Verarbeitung der Signalwerte parallel, können diese Verzögerungsglieder eventuell entfallen und die korrigierten Signalwerte können direkt vom ersten Verzögerungsglied 2 oder von der Rechenschaltung 3 übernommen werden.

Als Verzögerungsglieder können je nach Schaltungsausführung Laufzeitglieder oder Speicherelemente eingesetzt werden.

Als Komparator 4 kann eine übliche hardwaremässig ausgeführte Subtraktionsschaltung, z.B. Baustein SN54181, Fa. Texas Instruments, verwendet werden, der eine Schwellwertschaltung nachgeschaltet ist.

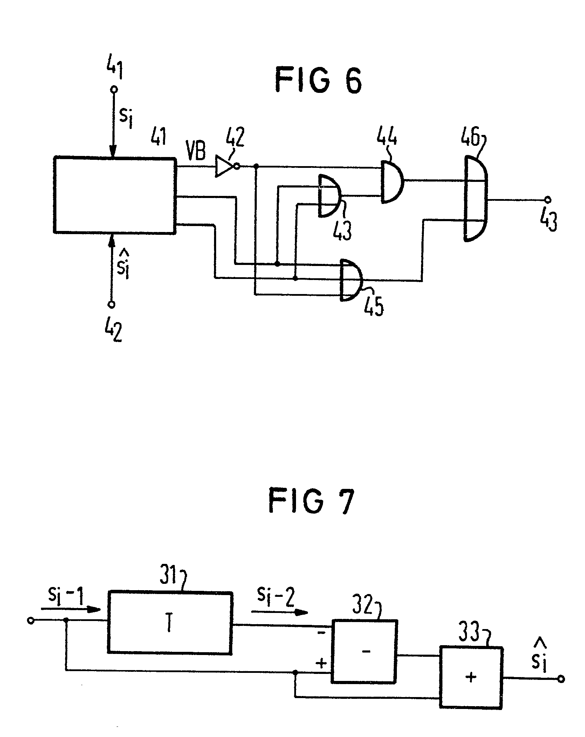

Ein Ausführungsbeispiel ist in Fig. 6 dargestellt. Der Subtraktionsschaltung 41 werden der Bildsignalschätzwert $\hat{s}$, und der Bildsignalwert $s$, über die Eingänge $4_1$ und $4_2$ zugeführt. Die höchstwertigen Bits der Differenz werden für positive und negative Differenzen überprüft. Dies geschieht durch das ODER-Gatter 43 mit nachgeschaltetem UND-Gatter 44 bzw. durch das NOR-Gatter 45. Dem UND-Gatter 44 und dem NOR-Gatter 45 werden das Vorzeichenbit VB über einen Inverter 42 zugeführt. Die Ausgänge dieser Gatter sind über ein ODER-Gatter 46 zusammengefasst.

Die Rechenschaltung 3 besteht im einfachsten Fall aus einer Subtraktionsschaltung, die die Differenz zwischen zwei aufeinanderfolgenden Bildsignalwerten $s_{i-1}$, $s_i$ bzw. $s_{1-2}$, $s_{i-1}$ ermittelt, und einer

Additionsschaltung, in der diese Differenz zu dem letzten Bildsignalwert addiert wird

$$(\hat{s}_1 = s_{i-1} + s_{i-1} - s_{i-2})$$

(Fig. 7). Diese Rechenschaltung enthält, wie Figur 7 zeigt, ein Verzögerungsglied 31, dessen Eingang und Ausgang mit den Eingängen einer weiteren Subtraktionsschaltung 32 (Baustein SN54181, Firma Texas Instruments), verbunden sind, und einer Additionsschaltung 33, deren Eingänge mit dem Ausgang der Subtraktionsschaltung 32 bzw. dem Eingang des Laufzeitgliedes 31 verbunden sind.

Damit die in Fig. 2 angegebene Schaltungsanordnung nicht zur Unterdrückung von Bildsignalwerten führt, wird sendeseitig eine Kennzeichnung eingefügt, die grössere Differenzen in den Bildsignalwerten angibt.

Der Sendeteil nach Figur 3 enthält ein Verzögerungsglied 10, das zusammen mit einer Rechenschaltung 11 an den Eingang 9 angeschlossen ist. Die Ausgänge des Verzögerungsgliedes 10 und der Rechenschaltung 11 werden einem ersten Eingang $12_1$ bzw. einem zweiten Eingang $12_2$ eines Komparators 12 zugeführt, dessen Ausgang $12_3$ einen Codierer 14 steuert. Der Ausgang dieses Codierers ist mit einem elektronischen Umschalter 15 verbunden, dem über ein zusätzliches Laufzeitglied 13 die Signalwerte $s$, zugeführt werden. Der Ausgang des elektronischen Umschalters 15 ist mit 16 bezeichnet. Diesem Sendeteil wurde der vorstehend beschriebene Empfangsteil nachgebildet. Jedesmal, wenn ein Vergleich der errechneten Bildsignalschätzwerte $\hat{s}_i$ mit den Bildsignalwerten $s$, eine Überschreitung des vorgegebenen Schwellwertes ergibt, wird über den Codierer 14 eine Kennzeichnung k ausgegeben. Diese wird durch den elektronischen Umschalter 15 mit den Bildsignalwerten $s$, zu einem Multiplexsignal $s$, k zusammengefasst.

Diese Kennzeichnung kann aus einem Bit bestehen, das jedem Bildsignalwert zugeordnet wird, die Kennzeichnung kann aber auch, wie bereits einleitend erwähnt, vor der Übertragung einer Bildzeile in der Austastlücke übertragen werden.

Der Codierer sorgt für das Setzen des entsprechenden Bits oder fügt eine kennzeichnende Kombination ein. Er kann durch ein Schieberegister realisiert werden, von dem ein oder mehrere Bits bei einer Kennzeichnung gesetzt werden.

Das Prinzipschaltbild nach Fig. 4 dient der Erläuterung der Wirkungsweise der Kennzeichnung. Der Empfangsteil nach Fig. 4 stimmt weitgehend mit dem in Fig. 2 dargestellten Empfangsteil überein. Das erste Verzögerungsglied 2, die Rechenschaltung 3, der Komparator 4, die Verzögerungsglieder 5 und 6 sowie der elektronische Umschalter 7 sind ebenfalls vorhanden. Der Rechenschaltung 3 werden die Bildsignalwerte s über ein viertes Verzögerungsglied 24 und einen zweiten elektronischen Umschalter 19 zugeführt. Der Eingang der Schaltungsanordnung 1 führt auf einen dritten elektronischen Umschalter 18, der als Demultiplexer arbeitet und die empfangenen Signale in Bildsignalwerte und Kennzeichnung k aufteilt. Die Kennzeichnung k gelangt zu einem Decodierer 20, dessen Ausgang über ein fünftes Verzögerungsglied 21 mit einem ODER-Gatter 22 verbunden ist, dessen zweiter Eingang mit dem Ausgang des Komparators 4 verbunden ist, und dessen Ausgang sowohl den elektronischen Schalter 7 als auch den zweiten elektronischen Schalter 19 steuert, dessen zweiter Eingang an den Ausgang des dritten Verzögerungsgliedes 6 angeschaltet ist.

Wird keine Kennzeichnung empfangen, die angibt, dass eine Differenz zwischen dem Bildsignalwert $s_i$ und dem Bildsignalschätzwert $\hat{s}_i$ den vorgegebenen Schwellwert überschreitet, dann stimmt die Arbeitsweise der in Fig. 4 angegebenen Prinzipschaltung mit der in Fig. 2 angegebenen Schaltungsanordnung weitgehend überein. Wird von einem empfangenen Bildsignalwert auf den errechneten Bildsignalschätzwert umgeschaltet, der über den elektronischen Umschalter 7 an den Ausgang 8 der Schaltungsanordnung abgegeben wird, so wird dieser Bildsignalschätzwert $\hat{s}_i$ über den zweiten elektronischen Umschalter 19 auch dem Eingang der Rechenschaltung 3 zugeführt, die ihn zur Berechnung des nächsten Bildsignalschätzwertes $\hat{s}_{i+1}$ mitverwendet. Hierdurch wird die Mitverwendung fehlerhafter Bildsignalwerte s bei der Berechnung des Bildsignalschätzwertes weitestgehend vermieden.

Wird eine Kennzeichnung k vom Decodierer 20 erkannt, so wird über das fünfte Verzögerungsglied 21 zum richtigen Zeitpunkt durch das ODER-Gatter 22 der elektronische Umschalter 7 auf Auswahl der Bildsignalwerte $s_i$ gestellt, obwohl der vorgegebene Schwellwert überschritten ist.

Dient nur ein Bit der empfangenen Bildsignalwerte als Kennzeichnung, so braucht nur dieses vom Decodierer überprüft werden. Sonst besteht er aus einer Gatterschaltung, durch die eine als Kennzeichnung dienende Binärkombination ausgewertet wird.

In Fig. 5 ist eine Variante des Empfangsteils dargestellt, die es ermöglicht, ohne Kennzeichnung grösserer Differenzen bei aufeinanderfolgenden Bildsignalwerten auszukommen.

Diese Schaltungsanordnung entspricht weitgehend der Fig. 4, der elektronische Umschalter 18 am Eingang 1, der Decodierer 20 und das fünfte Verzögerungsglied 21 fehlen jedoch. Statt dessen ist in dem Signalweg der Bildsignalelemente dem ersten Verzögerungsglied 2 ein zweites Verzögerungsglied 23 nachgeschaltet. Eingang und Ausgang des Verzögerungsgliedes 23 sind mit den Eingängen eines zweiten Komparators 25 verbunden, dessen Ausgang mit einem Eingang des ODER-Gatters 22 verbunden ist.

Dem zweiten Komparator 25 werden durch das Verzögerungsglied 23 zwei benachbarte Bildsignalwerte $s_i$ und $s_{i+1}$ zugeführt. Bei einem Vergleich des am ersten Komparator 4 anliegenden Bildsignalwertes $s_i$ mit dem aus vorhergehenden Bildsignalwerten errechneten Bildsignalschätzwert $\hat{s}$, ergibt sich eine Überschreitung des zulässigen Schwellwertes. Am Ausgang des Komparators 4 liegt die logische Null an, die den elektronischen Umschalter 7 auf die Auswahl des errechneten Bildsignalschätzwertes $\hat{s}_i$ umschalten würde, wenn nicht, bedingt durch eine geringe Differenz zwischen den Bildsignalwerten s und $s_{i+1}$, der zweite Komparator 25 die logische Eins ergibt, die den elektronischen Umschalter 7 über das ODER-Gatter 22 zur Auswahl des empfangenen Bildsignalwertes $s_i$ veranlasst.

Mit dieser Schaltungsanordnung ist somit ebenfalls eine Übertragung von grossen Differenzen zwischen benachbarten Bildsignalwerten über Bildkanten möglich, ohne das zusätzliche Information übertragen werden muss. Einzelne stark abweichende Signalwerte werden dagegen unterdrückt.

## Patentansprüche

1. Verfahren zur Bildfehlerkorrektur bei der digitalen Übertragung von Bildsignalen, dadurch gekennzeichnet, dass empfangsseitig ein Vergleich der empfangenen Bildsignalwerte ($s_i$) mit aus benachbarten Bildsignalwerten errechneten Bildsignalschätzwerten ($\hat{s}_i$) erfolgt und dass bei einer Überschreitung eines vorgegebenen Schwellwertes (S) durch den Betrag der Differenz zwischen dem Bildsignalwert ($s_i$) und dem zugehörigen Bildsignalschätzwert ($\hat{s}_i$) statt des empfangenen Bildsignalwertes ($s_i$) der entsprechende Bildsignalschätzwert ($\hat{s}_i$) weiterverwendet wird.

2. Verfahren nach Anspruch 1, dadurch gekennzeichnet, dass eine zusätzliche Kennzeichnung übertragen wird, wenn die Differenzen zwischen dem Bildsignalwert ($s_i$) und einem benachbarten Bildsignalwert ($s_{i-1}$) oder dem errechneten Bildsignalschätzwert ($\hat{s}_i$) den vorgegebenen Schwellwert überschreiten.

3. Verfahren nach Anspruch 1, dadurch gekennzeichnet, dass die höchstwertigsten Bits der Bildsignalwerte ($s_i$) durch eine fehlererkennende Codierung gesichert werden.

4. Verfahren nach Anspruch 2 oder 3, dadurch gekennzeichnet, dass empfangsseitig bei der Überschreitung des Schwellwertes (S) durch die Differenz zwischen dem Bildsignalwert ($s_i$) und einem benachbarten Bildsignalwert ($s_{i-1}$) oder dem Bildsignalschätzwert ($\hat{s}_i$) die übertragenen Bildsignalwerte ($s_i$) weiterverwendet werden, wenn diese Überschreitung durch die Kennzeichnung bestätigt oder aufgrund der fehlererkennenden Codierung als korrekt angenommen wird.

5. Verfahren nach Anspruch 1, dadurch gekennzeichnet, dass bei den Schwellwert (S) überschreitenden Differenzen zweier benachbarter Bildsignalwerte ($s_{i-1}$, $s_i$) dann der empfangene Bildsignalwert ($s_i$) weiterverwendet wird, wenn dieser zu mindestens einem weiteren angrenzenden Bildsignalwert ($s_{i+1}$) eine Differenz kleiner als der vorgegebene Schwellwert (S) aufweist.

6. Schaltungsanordnung zur Durchführung des Verfahrens nach einem der vorhergehenden Ansprüche, dadurch gekennzeichnet, dass in einem Empfangsteil die Bildsignalwerte ($s_i$) einem ersten Eingang ($4_1$) eines Komparators (4) und einem Eingang einer Rechenschaltung (3) zugeführt werden, deren Ausgang mit einem zweiten Eingang ($4_2$) des Komparators (4) verbunden ist, dessen Ausgang einen elektronischen Umschalter (7) steuert, dessen Eingängen die empfangenen Bildsignalwerte ($s_i$) und die Bildsignalschätzwerte ($\hat{s}_i$) zugeführt sind (Fig. 2).

7. Schaltungsanordnung zur Durchführung des Verfahrens nach Anspruch 2 oder 3, dadurch gekennzeichnet, dass in einem Sendeteil ebenfalls ein Komparator (12) vorgesehen ist, dessen erstem Eingang ($12_1$) die Bildsignalwerte ($s_i$) zugeführt werden, dass eine weitere Rechenschaltung (11) vorgesehen ist, der ebenfalls die Bildsignalwerte ($s_i$) zugeführt werden, dass der Ausgang der weiteren Rechenschaltung mit einem zweiten Eingang ($12_2$) des Komparators (12) verbunden ist, dessen Ausgang einem Codierer (14) zugeführt ist, dessen Ausgang wiederum mit einem elektronischen Umschalter (15) verbunden ist, der die vom Codierer (14) abgegebenen Kennzeichnungen (k) und die Bildsignalwerte ($s_i$) aussendet (Fig. 3).

8. Schaltungsanordnung nach Anspruch 6 oder 7, dadurch gekennzeichnet, dass im Empfangsteil ein Decodierer (20) vorgesehen ist, dem die empfangenen Kennzeichnungen oder die Zusatzinformationen zur Fehlererkennung zugeführt sind, dass der Ausgang des Decodierers (20) mit dem Ausgang des Komparators (4) über eine logische Verknüpfung (22) den elektronischen Umschalter (7) steuert und dass ein weiterer elektronischer Umschalter (19) dem Eingang der Rechenschaltung (3) bei der Auswahl des Bildsignalschätzwertes ($\hat{s}_i$) zur Weiterverwendung statt des Bildsignalwertes ($s_i$) vorgeschaltet ist (Fig. 4).

9. Schaltungsanordnung nach Anspruch 6 oder 7, dadurch gekennzeichnet, dass im Empfangsteil ein zusätzliches Verzögerungsglied (23) in den Signalweg der Bildsignalelemente ($s_i$) geschaltet ist, dass ein zweiter Komparator (25) vorgesehen ist, dessen Eingängen von dem zusätzlichen Verzögerungsglied (23) benachbarte Bildsignalwerte ($s_i$, $s_{i-1}$) zugeführt werden, deren Differenz überprüft wird, dass der Ausgang des zusätzlichen Komparators (25) mit dem Ausgang des Komparators (4) über eine logische Verknüpfung (22) den elektronischen Schalter (7) und den dem Eingang der Rechenschaltung (3) vorgeschalteten weiteren elektronischen Umschalter (19) steuert, der bei der Auswahl des Bildsignalschätzwertes ($\hat{s}_i$) zur Weiterverwendung dem Eingang der Rechenschaltung ebenfalls diesen Bildsignalschätzwert zugeführt (Fig. 5).

10. Schaltungsanordnung nach einem der vorhergehenden Ansprüche 1 bis 9, dadurch gekennzeichnet, dass als Rechenschaltung (3) ein Prädiktor oder ein Interpolator vorgesehen ist.

## Claims

1. A method of correcting picture faults in the digital transmission of video signals, characterized in that at the receiving end the received video signal values ($s_i$) are compared with video signal estimated values ($\hat{s}_i$) calculated from adjacent video signal values and that when a given threshold value (S) is exceeded by the amount of the difference between the video signal value ($s_i$) and the associated video signal estimated value ($\hat{s}_i$), the corresponding video signal estimated value ($\hat{s}_i$) is used instead of the received video signal value ($s_i$).

2. A method as claimed in claim 1, characterized in that an additional characteristic is transmitted when the differences between the video signal value ($s_i$) and an adjacent video signal value ($s_{i-1}$) or the calculated video signal estimated value ($\hat{s}_i$) exceed the given threshold value.

3. A method as claimed in claim 1, characterised in that the highest value bits of the video signal values ($s_i$) are safeguarded by a fault recognising code.

4. A method as claimed in claims 2 or 3, characterised in that at the receiving end, when the threshold value (S) is exceeded by the difference between the video signal value ($s_i$) and an adjacent video signal value ($s_{i-1}$) or the video signal estimated value ($\hat{s}_i$), the transmitted video signal values ($s_i$) are used when this excess is confirmed by the characteristic or is assumed to be correct on the basis of the fault recognising code.

5. A method as claimed in claim 1, characterised in that when differences between two adjacent video signal values ($s_{i-1}$, $s_i$) exceed the threshold value (S), the received video signal value ($s_i$) is used when the difference between this and at least one further adjacent video signal value ($s_{i+1}$) is less than the given threshold value (S).

6. A circuit arrangement for carrying out the method claimed in one of the preceeding claims, characterised in that in a receiving section the video signal values ($s_i$) are fed to a first input ($4_1$) of a comparator (4) and to an input of a calculating circuit (3), the output of which is connected to a second input ($4_2$) of the comparator (4) whose output controls an electronic change-over switch (7) whose inputs are supplied with the received video signal values ($s_i$) and the video signal estimated values ($\hat{s}_i$) (Fig. 2).

7. A circuit arrangement for carrying out the method claimed in claims 2 or 3, characterised in that a transmitting section likewise includes a comparator (12), the first input ($12_1$) of which is supplied with the video signal values ($s_i$), that a further calculating circuit (11) is provided which is likewise supplied with the video signal values ($s_i$), that the output of the further calculating circuit is connected to a second input ($12_2$) of the comparator (12) whose output leads to a coder (14) whose output is in turn connected to an electronic change-over switch (15) which transmits the characteristics (k) emitted from the coder (14) and the video signal values ($s_i$) (Fig. 3).

8. A circuit arrangement as claimed in claims 6 or 7, characterised in that the receiving section includes a decoder (20) which is supplied with the received characteristics or the additional items of information for the fault recognition, that the output of the decoder (20) — via a logic link (22) with the output of the comparator (4) — controls the electronic change-over switch (7) and that a further electronic change-over switch (19) is connected in series with the input of the calculating circuit (3) when the video signal estimated value $(\hat{s}_i)$ is selected for use instead of the video signal value $(s_i)$ (Fig. 4).

9. A circuit arrangement as claimed in claims 6 or 7, characterised in that the receiving section an additional delay component (23) is connected into the signal path of the video signal elements $(s_i)$, that a second comparator (25) is provided, the inputs of which are supplied via the additional delay component (23) with adjacent video signal values $(s_i, s_{i+1})$, the difference between which is checked, that the output of the additional comparator (25) — via a logic link (22) with the output of the comparator (4) — controls the electronic switch (7) and the further electronic change-over switch (19) which is connected in series with the input of the calculating circuit (3) and which, when the video signal estimated value $(\hat{s}_i)$ is selected for use, likewise supplies this video signal estimated value to the input of the calculating circuit (Fig. 5).

10. A circuit arrangement as claimed in one of the preceding claims 1 to 9, characterised in that a predictor or an interpolator is provided as calculating circuit (3).

**Revendications**

1. Procédé pour corriger les défauts d'images lors de la transmission numérique de signaux d'images, caractérisé par le fait qu'une comparaison entre les valeurs reçues $(s_i)$ du signal d'image et des valeurs estimées $(\hat{s}_i)$ du signal d'image, calculées à partir de valeurs voisines des signaux d'image, est réalisée du côté réception et que, dans le cas où la valeur de la différence entre la valeur $(s_i)$ du signal d'image et la valeur estimée associée $(\hat{s}_i)$ du signal d'image dépasse une valeur de seuil prédéterminée (S), la valeur estimée correspondante $(\hat{s}_i)$ du signal d'image continue à être utilisée à la place de la valeur reçue $(s_i)$ du signal d'image.

2. Procédé suivant la revendication 1, caractérisé par le fait qu'un indicatif supplémentaire est transmis lorsque les différences entre la valeur $(s_i)$ du signal d'image et une valeur voisine $(s_{i-1})$ du signal d'image ou la valeur estimée calculée $(\hat{s}_i)$ du signal d'image dépassent la valeur de seuil prédéterminée.

3. Procédé suivant la revendication 1, caractérisé par le fait que les bits de poids les plus élevés des valeurs $(s_i)$ du signal d'image sont protégés au moyen d'un codage identifiant les erreurs.

4. Procédé suivant la revendication 2 ou 3, caractérisé par le fait que, lorsque la différence entre la valeur $(s_i)$ du signal d'image et une valeur voisine $(s_{i-1})$ du signal d'image ou la valeur estimée $(\hat{s}_i)$ du signal d'image dépasse la valeur de seuil (S), on continue à utiliser, du côté réception, les valeurs transmises $(s_i)$ du signal d'image, lorsque ce dépassement est confirmé par l'indicatif ou est supposé comme étant correct sur la base du codage identifiant l'erreur.

5. Procédé suivant la revendication 1, caractérisé par le fait que, lorsque les différences entre deux valeurs voisines $(s_{i-1}, s_i)$ du signal.d'image dépassent la valeur de seuil (S), on continue à utiliser la valeur reçue $(s_i)$ du signal d'image lorsque cette valeur présente, par rapport à au moins une autre valeur voisine $(s_{i+1})$ du signal d'image, une différence inférieure à la valeur de seuil prédéterminée (S).

6. Montage pour la mise en œuvre du procédé suivant l'une des revendications précédentes, caractérisé par le fait que dans une partie réception, les valeurs $(s_i)$ du signal d'image sont envoyées à une première entrée $(4_1)$ d'un comparateur (4) et à une entrée d'un circuit de calcul (3), dont la sortie est reliée à une seconde entrée $(4_2)$ du comparateur (4), dont la sortie commande un commutateur électronique (7), aux entrées duquel sont envoyées les valeurs reçues $(s_i)$ du signal d'image et les valeurs estimées $(\hat{s}_i)$ du signal d'image (figure 2).

7. Montage pour la mise en œuvre du procédé suivant la revendication 2 ou 3, caractérisé par le fait qu'il est également prévu, dans une partie émission, un comparateur (12) à la première entrée $(12_1)$ duquel sont envoyées les valeurs $(s_i)$ du signal d'image, qu'il est prévu un autre circuit de calcul (11) auquel les valeurs $(s_i)$ du signal d'image sont également envoyées, que la sortie de l'autre circuit de calcul est reliée à une seconde entrée $(12_2)$ du comparateur (12), dont la sortie est raccordée à un codeur (14), dont la sortie est à nouveau reliée à un commutateur électronique (15) qui émet les indicatifs (k) délivrés par le codeur (14) et les valeurs $(s_i)$ du signal d'image (figure 3).

8. Montage suivant la revendication 6 ou 7, caractérisé par le fait qu'il est prévu, dans la partie réception, un décodeur (20) auquel les indicatifs reçus ou les informations supplémentaires pour l'identification d'erreurs sont envoyés, que la sortie du décodeur (1) commande, en association avec la sortie du comparateur (4), le commutateur électronique (7) par l'intermédiaire d'un circuit logique (22) et qu'un autre commutateur électronique (19) est branché en amont de l'entrée du circuit de calcul (3) lors du choix de la valeur estimée $(\hat{s}_i)$ du signal d'image, pour la poursuite de l'utilisation de cette valeur à la place de la valeur $(s_i)$ du signal d'image (figure 4).

9. Montage selon la revendication 6 ou 7, caractérisé en ce que, dans la partie réception, un circuit supplémentaire de retardement (23) est branché dans la voie de transmission des éléments $(s_i)$ du signal d'image, qu'il est prévu un second comparateur (25) aux entrées duquel le circuit supplémentaire de retardement (23) envoie des valeurs voisines $(s_i, s_{i+1})$ du signal d'image, dont la différence est contrôlée, et que la sortie du comparateur supplémentaire (25) commande, en association avec la sortie du comparateur (4), le commutateur électronique (7) par l'intermédiaire d'un circuit logique (22), et commande l'autre commutateur électronique (19) branché en amont de l'entrée du circuit de calcul (3) et qui, lors de la sélection de la valeur estimée ($\hat{s}_i$) du signal d'image en vue de la poursuite de son utilisation, envoie également cette valeur estimée du signal d'image à l'entrée du circuit de calcul (figure 5).

10. Montage suivant l'une des revendications précédentes 1 à 9, caractérisé par le fait qu'il est prévu, comme circuit de calcul (3), un dispositif de détermination prévisionnel ou un interpolateur.

# FIG 1

# FIG 5

## FIG 2

## FIG 3

## FIG 4

# FIG 6

# FIG 7